# EUROPEAN PATENT SPECIFICATION

(11) **EP 0 522 885 B1**
(45) Date of publication and mention of the grant of the patent: **24.09.1997**
(21) Application number: 92306398.6
(22) Date of filing: 13.07.1992
(51) Int. Cl.: H04B 7/26, H04Q 7/22

(54) **Method and arrangement of detecting control channel in mobile communications system**
Verfahren und Einrichtung zur Erkennung eines Steuerungskanal in einem Mobil-Kommunikationssystem
Méthode et dispositif pour détecter un canal de commande dans un système de communications mobile

(30) Priority: 12.07.1991 JP 171527/91
(43) Date of publication of application: 13.01.1993
(73) Proprietor: NEC CORPORATION, Tokyo (JP)
(72) Inventor: Maru, Tsuguo, c/o NEC Corporation, Tokyo (JP)
(74) Representative: Moir, Michael Christopher

(56) References cited:
- EP-A- 283 955

## Description

The present invention relates generally to a method and arrangement of detecting a control channel in a cellular mobile communications system, and more specifically to such a method and arrangement wherein there is no distinction between control and voice channels and wherein a mobile unit, before entering into a standby mode after being energized, specifies a control channel by detecting fast FSK (Frequency Shift Keying (viz., MSK (Minimum Shift Keying)) carrier components involved in a channel signal.

It is known in the art that the basic traffic carried in cellular radio mobile networks falls into two categories: voice (or data), which is outputted to the system users, and control signals, which are invisible to the users but which are essential to sustain the voice channels as the mobile units move around in the cellular radio environment, passing from one cell and to another.

In mobile communications systems such as the AMPS (Advanced Mobile Phone System) in the United States and the NTT (Nippon Telephone & Telegram) system in Japan, plural control channels are dedicatedly assigned and are distinctly discriminated from voice channels. When a mobile unit makes a call, it scans the dedicated control channels according to a program previously stored therein and detects the control channel with the strongest electric field intensity. In other words, before a mobile unit is energized and enters into a standby mode with this kind of mobile communications system, the mobile unit scans only the control channels.

Contrarily, in the NMT (Nordic Mobile Telephone) system used in Scandinavia, there is no distinction between voice and control channels. Accordingly, a mobile unit is firstly required, before entering into the standby mode, to detect a control channel by scanning a plurality of channels assigned to the mobile system prior establishing a communication with a base station. The detection of the control channel is implemented by detecting MSK carrier components involved in a channel assigned to a control channel. Following this, the mobile unit decodes a control signal transmitted over the channel and finally ascertains the channel in question as being an available control channel.

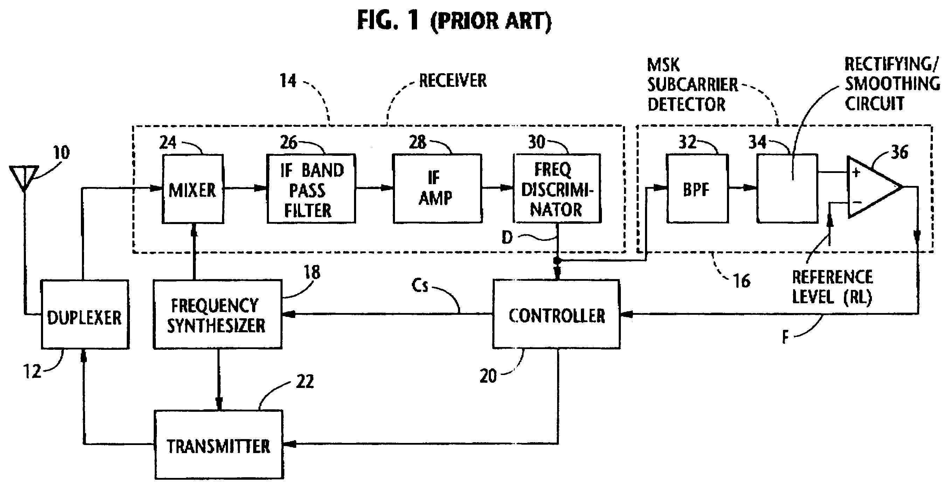

Before turning to the present invention it is deemed preferable to describe, with reference to Fig. 1, the manner for detecting a control channel in the above mentioned NMT system. Fig. 1 shows only a portion of a mobile unit which is relevant to the present invention for the convenience of simplicity.

As shown, the Fig. 1 arrangement generally comprises an antenna 10, a duplexer 12, a receiver 14, a MSK carrier detector 16, a frequency synthesizer 18, a controller 20 and a transmitter 22. The receiver 14 is comprised of a mixer 24, an IF (Intermediate Frequency) bandpass filter 26, an IF amplifier 28 and a frequency discriminator 30. On the other hand, the MSK carrier detector 16 includes a bandpass filter (BFF) 32, a rectifying/smoothing circuit 34 and a comparator 36.

The transmitter 22 is arranged to transmit a signal under the control of the frequency synthesizer 18 and the controller 20. The signal outputted from the transmitter 22 is directed to a base station (not shown) via the duplexer 12 and the antenna 10. The signal transmission from the mobile unit (Fig. 1) is not relevant to the present invention and hence further description will be omitted to simplify the instant disclosure.

Before the mobile unit of Fig. 1 enters into the standby mode, the controller 20 begins a scan of all the channels assigned to the system, according to a previously stored program for detecting a control channel. The channel scan is implemented by sequentially changing the output frequency of the frequency synthesizer 18 under the control of the controller 20.

Before the mobile unit enters into a standby mode the controller 20 controls the frequency synthesizer 18 to output a frequency for selecting or acquiring a first one of the plural channels assigned to the system.

For the convenience of description, it is assumed that the channel selected is assigned to a control channel.

The mixer 24 is supplied, via the antenna 10 and the duplexer 12, with the channel signal and outputs an IF signal. The harmonic components of the IF output of the mixer 24 are removed by the IF bandpass filter 26. The output of the filter 26 is amplified to a predetermined level by the IF amplifier 28. The frequency discriminator 30 demodulates the IF signal applied from the IF amplifier 28 and produces a MSK signal whose bit rate is 1200 baud.

As is known in the art, the NMT system adopts the modulation rate of 1200 baud. The modulation method is MSK (viz., fast FSK (Frequency Shift Keying)) with the subcarrier (or tone) frequencies 1200 Hz and 1800 Hz for the logical "one" and "zero" respectively.

The MSK signal outputted from the frequency discriminator 30 (viz., demodulated subcarrier signal D) is applied to the bandpass filter 32 whose lower and upper cutoff frequencies are set to 1200 Hz and 1800 Hz respectively. The output of the BPF 32 is rectified and smcothed at the next stage 34. The comparator 36 compares the dc (direct current) output of the rectifying/smoothing circuit 34 with a reference level RL. In the event that the output of the circuit 34 exceeds the reference level RL, the output (denoted by F) of the comparator 36 assumes a logic "1". The controller 20, in response to the output F assuming a logic "1", instructs the frequency synthesizer 18 to terminate the channel scanning and receives the MSK signal from frequency discriminator 30. Subsequently, the controller 20 decodes the demodulated signal D and ascertains if the channel assigned as a control channel is available or not.

Contrarily, in the event that the Fig. 1 arrangement receives a signal of a channel which has been not assigned to a control channel, the output of the comparator 36 takes a logic "0". Therefore, the controller 20 controls the frequency synthesizer 18 such as to acquire the next channel signal.

As is well known in the art, frequency re-use is a fundamental concept in cellular radio communications system. That is, identical channel frequencies are reused in remote cells by balancing the conflicting requirements of area coverage and user capacity without inviting co-channel interference. This means that each cell involves a plurality of channels which are not used or available.

Accordingly, the above mentioned prior art has suffered the problem that control channel searching is undesirably time consuming due to the vacant or not-in-use channels. In more specific terms, when the frequency synthesizer 18 is controlled to tune to a given vacant channel, the IF amplifier 28 amplifies thermal noise due to a limiter therein (not shown). Thus, the frequency discriminator 30 produces noise which include a very wide range of frequencies including a range from 1200 Hz to 1800 Hz, and as such, the output F of the comparator 36 may indicate a logic "1" although the mobile unit of Fig. 1 is supplied with a vacant channel. The controller 20, in response to the logic "1" from the comparator 36, terminates the control channel scanning and receives the decoded signal D from the frequency discriminator 30 and then decodes same to check to see if the channel in question is available or not. In this instance, the controller 20 detects that the channel in question (viz., vacant channel) is not available.

Merely by way of example, it takes about 20 ms for the comparator 36 to generate the output F from the tuning to a given channel by the controller 20. On the other hand, more than 120 ms is required for the controller 20 to complete the decoding of the demodulated signal D. Therefore, if the mobile unit scans the vacant channels, it takes a considerable time before the mobile unit detects a control channel which is available.

Apparatus for selecting a channel in a cellular mobile communication system having dedicated control channels is described in European patent publication EP-A-0 283 955. The specification teaches a mobile communication system having two operating systems co-existing in one area, and a mobile station having a transmitting and receiving circuit and a control unit subscribing to one of the two mobile communication systems for selecting a control channel thereof, a normal scan of the control channel of the subscribed-to system is activated, and then an extra scan of the control channel is activated when the control channel is not available during the normal scan, thereby reducing the possibility of an involuntary use of a non-subscribed-to system when the mobile station is temporarily in a blind section of the subscribed-to system.

It is an aim of the present invention to provide a method by which at least in preferred embodiments a control channel can be detected in a much shorter time duration relative to the aforesaid prior art in a mobile communications system wherein there are no dedicated control channels.

Another such aim of the present invention is to provide an arrangement by which a control channel can be detected in a much shorter time duration relative to the aforesaid prior art in a mobile communications system wherein there are no dedicated control channels.

According to a first aspect of the invention there is provided an arrangement as set out in Claim 1.

In a preferred embodiment the transmitted signal characteristic is a frequency shift keying sub-carrier component.

In another aspect the present invention provides a method as set out in Claim 3.

The features and advantages of the present invention will become more clearly appreciated from the following description taken in conjunction with the accompanying drawings in which like elements are denoted by like reference numerals and in which:
Fig. 1 is a block diagram showing the prior art arrangement discussed in the opening paragraphs of the instant disclosure; and
Fig. 2 is a block diagram showing one preferred embodiment of the present invention.

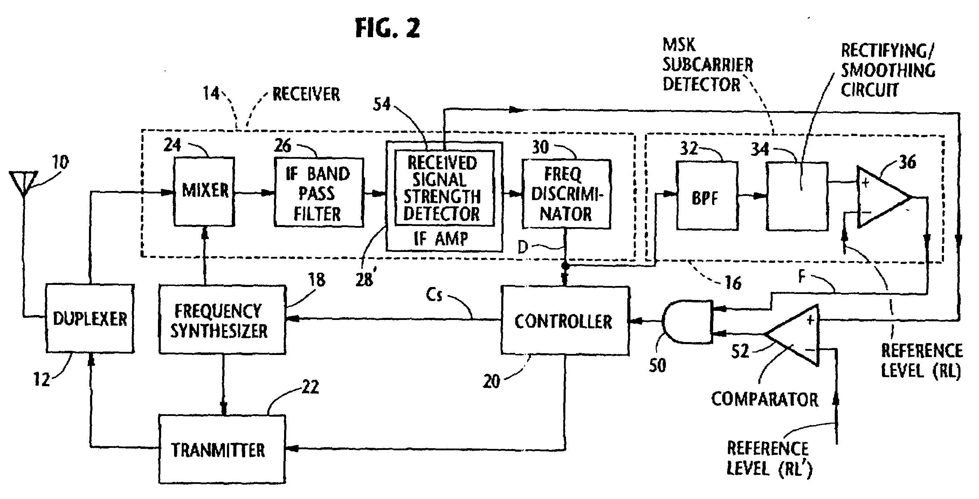

Reference is now made to Fig. 2, wherein there is shown, in block diagram form, one preferred embodiment of the present invention.

The arrangement of Fig. 2 differs from that of Fig. 1 in that the former arrangement further includes an AND gate 50 and a comparator 52. Still further, the IF amplifier 28 of Fig. 1 is modified such as to include a receive signal strength detector and thus the modified IF amplifier of Fig. 2 is denoted by reference numeral 28'. The remaining portions of Fig. 2 are respectively identical with the counterparts of Fig. 1 and, accordingly, the descriptions thereof will be omitted for the sake of simplifying the instant disclosure.

As shown, the comparator 52 receives the output of the detector 54 and a reference level RL', while the AND gate 50 is arranged to receive the outputs of the two comparators 36, 52.

Operation of the Fig. 2 arrangement will now be discussed.

It is assumed that the controller 20 instructs the frequency synthesizer 18, during the control channel scanning, to tune to a vacant channel, viz., a channel which is not used within a given cell wherein the mobile unit is located. In this instance, as in the prior art, the output F of the comparator 36 indicates a logic "1". However, the output of the received signal strength detector 54 indicates a zero or extremely low level in that no signal is transmitted over the vacant channel. If the reference level RL' is set to a level by which a signal level can well be distinguished from a noise level, then the comparator 52 issues a logic "0" in this case. Accordingly, the AND gate 50 issues a logic "0" irrespective of the fact that the output F of the comparator 36 indicates a logic "1".

The controller 50, upon determining the output of the AND gate 50 as a logic "0", immediately controls the frequency synthesizer 18 to scan or tune to the next channel. Thus, the time wasteful decoding operation by the controller 20 can effectively be avoided.

As above mentioned, the time duration for the controller 20 to decode the demodulated MSK signal is about six times that required for the comparator 36 to output a result. The removal of this time consuming decoding encountered with the vacant channels, is very advantageous.

It will be understood that the above disclosure is representative of only one possible embodiment of the present invention and that the concept on which the invention is based is not specifically limited thereto. For example, instead of the frequency shift keying subcarrier component some other transmitted signal characteristic of the assigned control channel may be detected.

## Claims

1. A mobile unit for use in a cellular mobile communications system wherein there are no dedicated control channels and wherein the mobile unit is arranged, before entering into a standby mode, to scan a plurality of channels assigned to the system for determining an assigned control channel by detecting a transmitted signal characteristic of the assigned control channel, the mobile unit including an arrangement comprising:
first means (10,12) for selecting one of the plurality of channels assigned to the system;
second means (54) for detecting the signal strength of the selected channel;
third means (32,34,36) for detecting the transmitted signal characteristic of the selected channel;
fourth means (52) for comparing the signal strength of the selected channel with a reference level in order to determine if the signal strength exceeds said reference level, said fourth means being coupled to said second means;
fifth means (50,20) for producing a first logic level indicative of the absence of an assigned control channel in the event that the signal strength is below said reference level, and for producing a second logic level indicative of the presence of an assigned control channel in the event that the signal strength exceeds said reference level and simultaneously the transmitted signal characteristic is detected, said fifth means being operatively coupled to said first and fourth means, and
wherein said first means is arranged to select another channel in response to said first logic level and to terminate the channel selection in response to said second logic level.

2. A cellular mobile communication system according to Claim 1 wherein said transmitted signal characteristic is a frequency shift keying sub-carrier component.

3. A method of operating a mobile unit for use in a cellular mobile communications system wherein there are no dedicated control channels, the method comprising, before a step of entering into a standby mode, scanning a plurality of channels assigned to the system to determine an assigned control channel by detecting a transmitted signal characteristic of the assigned control channel, the steps of scanning a plurality of channels assigned to the system comprising:
(a) selecting one of the plurality of channels assigned to the system;
(b) detecting the signal strength of the selected channel;
(c) detecting the transmitted signal characteristic of the selected channel;
(d) comparing the signal strength of the selected channel with a reference level in order to determine if the signal strength exceeds said reference level;
(e) producing a first logic level indicative of the absence of an assigned control channel in the event that the signal strength is below said reference level, and in response to the first logic level, repeating steps (a) to (e) for another channel; and
(f) producing a second logic level indicative of the presence of an assigned control channel in the event that the signal strength exceeds said reference level and simultaneously the transmitted signal characteristic is detected, and terminating channel scanning in response to said second logic level.

4. A method according to Claim 3 wherein the transmitted signal characteristic is a frequency shift keying sub-carrier component.

## Patentansprüche

1. Mobileinheit zur Benutzung in einem zellularen Mobilkommunikationssystems, in dem keine speziellen Steuerkanäle vorhanden sind und in dem die Mobileinheit so eingerichtet ist, daß sie, bevor sie in einen Standby-Modus schaltet, eine Vielzahl von dem System zugewiesenen Kanälen absucht, um einen zugewiesenen Steuerkanal durch Erkennen eines übertragenen Signalkennzeichens des zugewiesenen Steuerkanals zu bestimmen, wobei die Mobileinheit eine Anordnung enthält, welche umfaßt:
erste Mittel (10, 12) zum Auswählen eines aus der Vielzahl der dem System zugewiesenen Kanäle;
zweite Mittel (54) zum Erkennen der Signalstärke des ausgewählten Kanals;
dritte Mittel (32, 34, 36) zum Erkennen des übertragenen Signalkennzeichens des ausgewählten Kanals;
vierte Mittel (52) zum Vergleichen der Signalstärke des ausgewählten Kanals mit einem Bezugspegel um zu entscheiden, ob die Signalstärke den Bezugspegel überschreitet, wobei diese vierten Mittel mit den zweiten Mitteln verbunden sind;
fünfte Mittel (50, 20) zum Erzeugen eines ersten logischen Werts, der das Fehlen eines zugewiesenen Steuerkanals anzeigt in dem Fall, daß die Signalstärke unter dem Bezugspegel liegt, und zum Erzeugen eines zweiten logischen Werts, der das Vorhandensein eines zugewiesenen Steuerkanals anzeigt, in dem Fall, daß die Signalstärke den Bezugspegel übersteigt und zugleich das übertragene Signalkennzeichen erkannt wird, wobei die fünften Mittel mit den ersten und vierten Mitteln funktionell verbunden sind,
wobei die ersten Mittel so eingerichtet sind, daß sie als Reaktion auf den ersten logischen Wert einen anderen Kanal auswählen und als Reaktion auf den zweiten logischen Wert die Kanalwahl beenden wird.

2. Zelluläres Mobilkommunikationssystem nach Anspruch 1, wobei das übertragene Signalkennzeichen eine Frequenzumtastungs-(Frequency-Shift-Keying)Unterträgerkomponente ist.

3. Verfahren zum Betreiben einer Mobileinheit zur Benutzung in einem zellulären Mobilkommunikationssystem, in dem keine speziellen Steuerkanäle vorhanden sind, wobei das Verfahren es umfaßt, vor einem Schritt zum Schalten in den Standby-Modus eine Vielzahl der dem System zugewiesenen Kanäle abzusuchen, um einen zugewiesenen Steuerkanal durch Erkennen eines übertragenen Signalkennzeichens des zugewiesenen Steuerkanals zu bestimmen, wobei die Schritte des Absuchens einer Vielzahl der dem System zugewiesenen Kanäle umfassen:
(a) Auswählen eines aus der Vielzahl der dem System zugewiesenen Kanäle;
(b) Erkennen der Signalstärke des ausgewählten Kanals;
(c) Erkennen des übertragenen Signalkennzeichens des ausgewählten Kanals;
(d) Vergleichen der Signalstärke des ausgewählten Kanals mit einem Bezugspegel um zu entscheiden, ob die Signalstärke den Bezugspegel überschreitet;
(e) Erzeugen eines ersten logischen Werts, der das Fehlen eines zugewiesenen Steuerkanals anzeigt, in dem Fall, daß die Signalstärke unter dem Bezugspegel liegt, und als Reaktion auf den ersten logischen Wert die Schritte (a) bis (e) für einen anderen Kanal zu wiederholen; und
(f) Erzeugen eines zweiten logischen Werts, der das Vorhandensein eines zugewiesenen Steuerkanals anzeigt, in dem Fall, daß die Signalstärke den Bezugspegel überschreitet und zugleich das übertragene Signalkennzeichen erkannt wird, und als Reaktion auf den zweiten logischen Wert das Absuchen der Kanäle zu beenden.

4. Verfahren nach Anspruch 3, wobei das Kennzeichen des übertragenen Signals eine Frequenzumtastungs-(Frequency-Shift-Keying)Unterträgerkomponente ist.

## Revendications

1. Unité mobile destinée à être utilisée dans un système de communications mobile cellulaire, dans lequel il n'y a pas de canaux de commande spécialisés et dans lequel l'unité mobile est agencée, avant d'entrer en mode d'attente, pour explorer une pluralité de canaux affectés au système pour déterminer un canal de commande affecté en détectant une caractéristique du signal transmis du canal de commande affecté, l'unité mobile comprenant un agencement comportant :
un premier moyen (10, 12) pour sélectionner l'un d'une pluralité de canaux affectés au système;
un deuxième moyen (54) pour détecter la valeur du signal du canal sélectionné;
un troisième moyen (32, 34, 36) pour détecter la caractéristique du signal transmis du canal sélectionné.
un quatrième moyen (52) pour comparer la valeur du signal du canal sélectionné à un niveau de référence afin de déterminer si la valeur du signal est supérieure audit niveau de référence, ledit quatrième moyen étant couplé audit deuxième moyen;
un cinquième moyen (50, 20) pour produire un premier niveau logique indicateur de l'absence d'un canal de commande affecté dans le cas où la valeur du signal est inférieure audit niveau de référence, et pour produire une deuxième niveau logique indicateur de la présence d'un canal de commande affecté dans le cas où la valeur du signal est supérieure audit niveau de référence et simultanément la caractérique du signal transmis est détectée, ledit cinquième moyen étant couplé fonctionnellement auxdits premier et quatrième moyens, et
dans lequel ledit premier moyen est agencé pour sélectionner un autre canal en réponse audit premier niveau logique et pour arrêter la sélection de canal en réponse audit deuxième niveau logique.

2. Système de communications mobile cellulaire selon la revendication 1, dans lequel ladite caractéristique du signal transmis est une composante sous-porteuse à modulation par déplacement de fréquence.

3. Procédé d'exploitation d'une unité mobile destinée à être utilisée dans un système de communications mobile cellulaire, dans lequel il n'y a pas de canaux de commande spécialisés, ce procédé comportant, avant d'entrer en mode d'attente, l'exploration d'une pluralité de canaux affectés au système pour déterminer un canal de commande affecté en détectant une caractéristique du signal transmis du canal de commande affecté, les étapes de l'exploration d'une pluralité de canaux affectés au système comportant :
(a) la sélection de l'un d'une pluralité de canaux affectés au système;
(b) la détection de la valeur du signal du canal sélectionné;
(c) la détection de la caractéristique du signal transmis du canal sélectionné;
(d) la comparaison de la valeur du signal du canal sélectionnéer à un niveau de référence afin de déterminer si la valeur du signal est supérieure audit niveau de référence;
(e) la production d'un premier niveau logique indicateur de l'absence d'un canal de commande affecté dans le cas où la valeur du signal est inférieure audit niveau de référence et, en réponse au premier niveau logique, la répétition des étapes (a) à (e) pour un autre canal; et
(f) la production d'un deuxième niveau logique indicateur de la présence d'un canal de commande affecté dans le cas où la valeur du signal est supérieure audit niveau de référence et simultanément la caractéristique de signal transmis est détectée, et l'arrêt de l'exploration des canaux en réponse audit deuxième niveau logique.

4. Procédé selon la revendication 3, dans lequel la caractéristique du signal transmis est une composante à sous-porteuse à modulation par déplacement de fréquence.
